# EUROPEAN PATENT SPECIFICATION

(11) **EP 1 493 509 B1**
(45) Date of publication and mention of the grant of the patent: **17.01.2007**
(21) Application number: 03077107.5
(22) Date of filing: 03.07.2003
(51) Int. Cl.: B21D 41/04, B21D 19/04, F16F 9/32, B23P 11/00

(54) **Spin closing apparatus**
Vorrichtung zum Verschliessen durch Fliessdrücken
Dispositif de fermeture par fluotournage

(43) Date of publication of application: 05.01.2005
(73) Proprietor: Delphi Technologies, Inc., Troy, MI 48007 (US)
(72) Inventor: Arenas, Jose M., 11500 El Puerto de Santa Maria (ES); Hernandez, Carlos Andres, 11500 El Puerto de Santa Maria (ES)
(74) Representative: Denton, Michael John

(56) References cited:
- EP-A- 0 695 593
- DE-A- 2 455 901
- DE-A- 19 709 947

## Description

### Technical Field

The present invention relates to apparatus for spin closing an open end of a tube. The present invention has particular application in the assembly of a hydraulic damper.

### Background of the Invention

Hydraulic dampers, as used in the suspension system of a motor vehicle, for example, are well known. In general terms, the damper consists of a tube; a piston mounted inside the tube and capable of sliding movement in an axial direction; a rod guide closing one end of the tube; hydraulic fluid in the chambers on either side of the piston; and a piston rod secured to the piston and extending, in the axial direction, through one of the chambers and the rod guide. In some cases, the damper includes an additional outer tube, coaxial with the inner tube. Part of the assembly process requires the deformation (inward bending) and closing of the open end of the tube, or the outer tube (where present). EP-A-0695593 describes a known arrangement for closing the open end of a tube. The process of EP-A-0695593 provides an initial bend of the lip, followed by a bend through 90 degrees, at a single workstation. The apparatus of EP-A-0695593 requires free access in a vertical direction, and a considerable amount of movement in the vertical direction for the components of the apparatus. This is a slow process, which is only usable assuming no parts are attached to piston rod.

DE-A-19709947 describes apparatus in accordance with the preamble of claim 1.

### Summary of the Invention

It is an object of the present invention to overcome the above mentioned disadvantages.

Apparatus in accordance with the present invention, for spin closing the open end of a tube, is characterised by the features specified in Claim 1.

The apparatus of the present invention deforms or bends the open end of the tube through a predetermined angle in a single operation. The method is quicker than the arrangement described in EP-A-0695593, and only requires a small vertical movement of the head of the apparatus. The apparatus has a through passageway which allows the tube to pass through in the head in a substantially horizontal path.

### Brief Description of the Drawings

The present invention will now be described, by way of example, with reference to the accompanying drawings, in which:-
Figure 1 is a schematic cross-sectional view of a hydraulic damper prior to closing using the apparatus of the present invention;
Figure 2 is a side view, partly in cross-section, of apparatus in accordance with the present invention;
Figure 3 is an enlarged cross-sectional view of the rollers of the apparatus of Figure 2 on the line III-III of Figure 4; and
Figure 4 is an enlarged cross-sectional view on the line IV-IV of Figure 3.

### Description of the Preferred Embodiment

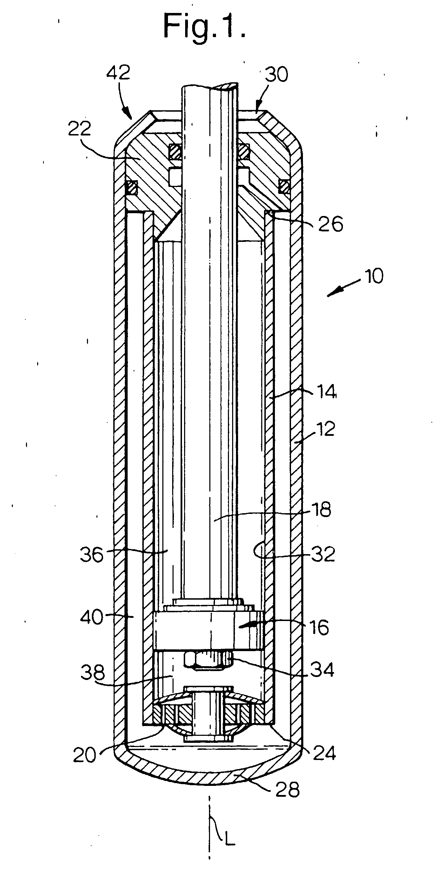

Figure 1 shows a hydraulic damper 10 for the suspension system of a motor vehicle. The damper 10 is of the twin-tube type and comprises an outer tube 12, an inner tube 14 substantially coaxial with the outer tube on an axis L, a piston assembly 16, a piston rod 18 having a longitudinal axis on axis L, a compensation valve 20, and a rod guide 22. The piston assembly 16 and the compensation valve 20 may be any suitable conventional design well known to those skilled in the art, and will not be described in detail. The inner tube 14 is substantially closed at one end 24 by the compensation valve 20, and is substantially closed at the other end 26 by the rod guide 22. The outer tube 12 is closed at one end 28 by an integral formation of the outer tube walls, and is closed at the other end 30 (the open end) by the rod guide 22 and by the inwardly deformed or bent-over portion 42 of the open end of the outer tube. The piston rod 18 extends through, and makes a scaling sliding fit with the rod guide 22. The piston assembly 16 makes a scaling sliding fit with the inner surface 32 of the inner tube 14. The piston rod 18 is secured to the piston assembly 16 by a nut 34 or any other suitable means. The piston assembly 16 divides the inner area of the inner tube 14 into a rebound chamber 36 and a compression chamber 38. The area between the inner tube 14 and the outer tube 12 defines a compensation chamber 40. The rebound and compression chambers 36 and 38 are substantially filled with hydraulic fluid to damp reciprocating movement of the piston assembly 16 and piston rod 18 along axis L relative to the outer and inner tubes 12 and 14. The compensation chamber 40 is partly filled with hydraulic fluid and acts as a reservoir for the hydraulic fluid in the rebound and compression chambers 36 and 38.

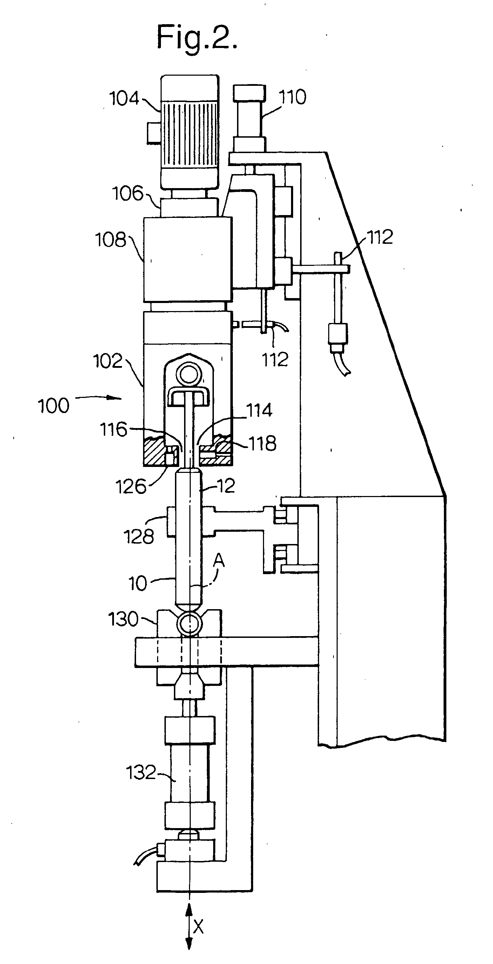

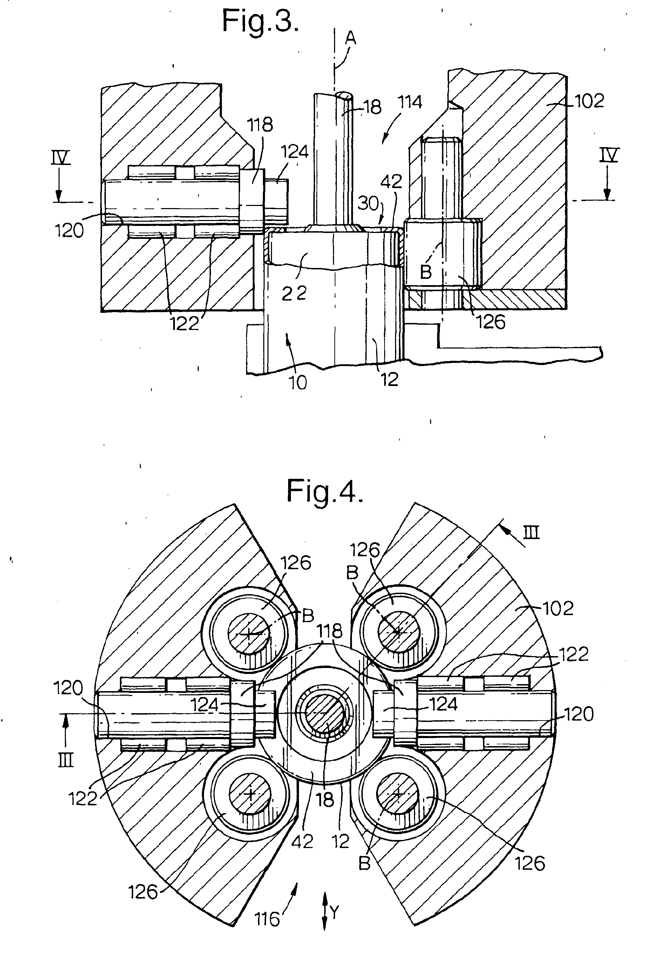

Referring to Figures 2 to 4, the apparatus 100 in accordance with the present invention comprises a head 102. The head 102 is rotatable about a longitudinal axis A. An electric motor 104 is attached to the head 102 by way of a planetary reduction unit 106 and a bearing box 108 to provide the rotational drive for the head 102. Other forms of rotational drive may be used besides an electric motor. A hydraulic cylinder 110 is also attached to the head 102 to provide reciprocating movement of the head in the longitudinal direction X along the longitudinal axis A. Other forms of reciprocating drive may be used besides a hydraulic cylinder. Sensors 112 monitor the position of, and force exerted by, the head 102, and are used to control the operation of the apparatus 100.

The head 102 has a through bore 114 which extends through the head. The through bore 114 has a longitudinal axis which is substantially aligned with the longitudinal (rotation) axis A of the head 102. The head 102 has a through passageway 116 which extends through the head in a diametrical direction Y substantially perpendicular to the longitudinal axis A. The passageway 116 opens into the through bore 114.

A pair of rollers 118 is rotatably mounted in the head 102. Each roller 118 is rotatably mounted in an associated bore 120 in the head 102 by way of bearings 122. Each bore 120 opens into the through bore 114 and into the through passageway 116. Each roller 118 has a contact surface 124 which is at a predetermined angle (in this embodiment, 90 degrees) to the longitudinal axis A. The contact surface 124 of each roller 118 is located in, or extends into, the through bore 114 and in the through passageway 116. The bores 120 are preferably diametrically opposed and aligned, and preferably extend in a direction substantially perpendicular to the diametrical direction Y of the through passageway 116.

Additional, or centring, rollers 126 are mounted in the head 102. The centring rollers 126 are positioned around, and project into, the through bore 114, and project into the through passageway 116. Each centring rollers 126 is rotatable about its longitudinal axis B, each such axis being substantially parallel to the longitudinal axis A. The centring rollers 126 act on the damper 10 (as explained below) to centralise the damper in the through bore 114.

The apparatus 100 may also include a transport clamp 128 which grips the damper 10 and moves the damper to and from the head 102. The apparatus 100 also preferably includes a platform 130 on which the closed end 28 of the outer tube 12 rests, and which is movable in the axial direction X by a ram 132.

The apparatus 100 is used to spin close the open end 30 of the outer tube 12 of the damper 10 as follows. After insertion of the various internal components of the damper 10, and the hydraulic fluid, the damper 10 is moved into the through passageway 116 of the head 102, in the diametrical direction Y, until the longitudinal axis L of the damper is substantially aligned with the longitudinal axis A of the through bore 114. The head 102 is then moved in the longitudinal direction X by the hydraulic cylinder 110 until the contact surfaces 124 of the rollers 118 engage the portion 42 of the open end 30 of the outer tube 12. At this stage, the portion 42 of the open end 30 is either partially bent over, or unbent. Next, the head 102 is rotated about the longitudinal axis A of the through bore 114 relative to the outer tube 12 by the electric motor 104. Substantially simultaneously, the head 102 is moved further in the longitudinal direction X by the hydraulic cylinder 110, relative to the outer tube 12, to inwardly deform the portion 42 of the open end 30 of the outer tube 12 with the contact surfaces 124 of the rollers 118. During rotation and reciprocal movement of the head 102, the centring rollers 126 engage the outer surface of the outer tube 12 to keep the damper 10 substantially centralised during the process. Also during rotation and reciprocal movement of the head 102, the sensors 112 monitor the position of the head and the force exerted by the rollers 118 on the portion 42 of the open end 30 of the outer tube 12. After the open end 30 has been closed, the rotation of the head 102 is stopped, the head is moved away from the outer tube, and the damper 10 passes out of the through passageway 116.

In the preferred arrangement described above, the portion 42 of the open end 30 of the outer tube 12 is bent through an angle of 90 degrees. It will be appreciated that other angles may be chosen (with appropriate changes required to the contact surface 124 of the rollers 118) to provide any suitable angle up to 90 degrees.

Although the present invention has been described in relation to the assembly of a hydraulic damper having twin tubes, it will be appreciated that the method and apparatus may be used for a hydraulic damper having a single tube, or may be used for any other type of tube which requires closing at one end.

The present invention has the advantage that minimal movement of the head 102 in the longitudinal direction X is required because of the presence of the through passageway 116 in the head. This considerably speeds up the process for spin closing the open end of the tube, and in the case of a hydraulic damper, for example, allows spin closing where the piston rod 18 has components attached to it outside of the tube 12.

## Claims

1. Apparatus (100) for spin closing an open end (30) of a tube (12) comprising a head (102); a through bore (114) having a longitudinal axis (A) and extending through the head; means (104) for rotating the head about the longitudinal axis; means (110) for reciprocally moving the head in the longitudinal direction (X); and a pair of rollers (118), each roller being rotatably mounted in a bore (120) in the head, each bore opening into the through bore, and each roller having a contact surface (124) at a predetermined angle to the longitudinal axis and which is positioned in the through bore; **characterised by** a through passageway (116) extending through the head in a diametrical direction (Y) substantially perpendicular to the longitudinal axis, and opening into the through bore; in that each bore opens into the through passageway; and in that each contact surface is positioned in the through passageway.

2. Apparatus as claimed in Claim 1, wherein the bores (120) for the rollers (118) are aligned and diametrically opposed relative to the through bore (114).

3. Apparatus as claimed in Claim 1 or Claim 2, wherein the bores (120) for the rollers (118) have a longitudinal axis which is substantially perpendicular to the longitudinal axis (A) of the through bore (114).

4. Apparatus as claimed in any one of Claims 1 to 3, wherein the predetermined angle is substantially 90 degrees.

5. Apparatus as claimed in any one of Claims 1 to 4, further comprising centring rollers (126) rotatably mounted in the head (102) for engaging and centring the tube (12) during spin closing.

6. Apparatus as claimed in any one of Claims 1 to 5, wherein the means for rotating the head comprises an electric motor (104).

7. Apparatus as claimed in any one of Claims 1 to 6, wherein the means for reciprocally moving the head comprises a hydraulic cylinder (110).

## Patentansprüche

1. Vorrichtung (100) zum Drehverschließen eines offenen Endes (30) eines Rohres (12), umfassend einen Kopf (102); eine Durchgangsbohrung (114) mit einer Längsachse (A), die sich durch den Kopf hindurch erstreckt; ein Mittel (104) zum Drehen des Kopfes um die Längsachse; ein Mittel (110) zum Hin- und Herbewegen des Kopfes in der Längsrichtung (X); und ein Paar Rollen (118), wobei jede Rolle in einer Bohrung (120) in dem Kopf drehbar befestigt ist, wobei sich jede Bohrung in die Durchgangsbohrung hinein öffnet und jede Rolle eine Kontaktfläche (124) unter einem vorbestimmten Winkel zu der Längsachse, die in der Durchgangsbohrung angeordnet ist, aufweist
**gekennzeichnet durch**
einen Durchgangskanal (116), der sich **durch** den Kopf in einer diametralen Richtung (Y) im Wesentlichen rechtwinklig zu der Längsachse erstreckt und sich in die Durchgangsbohrung hinein öffnet; **dadurch**, dass sich jede Bohrung in den Durchgangskanal hinein öffnet; und **dadurch**, dass jede Kontaktfläche in dem Durchgangskanal angeordnet ist.

2. Vorrichtung nach Anspruch 1, wobei die Bohrungen (120) für die Rollen (118) in Bezug auf die Durchgangsbohrung (114) ausgerichtet und diametral entgegengesetzt sind.

3. Vorrichtung nach Anspruch 1 oder 2, wobei die Bohrungen (120) für die Rollen (118) eine Längsachse aufweisen, die im Wesentlichen rechtwinklig zu der Längsachse (A) der Durchgangsbohrung (114) ist.

4. Vorrichtung nach einem der Ansprüche 1 bis 3, wobei der vorbestimmte Winkel im Wesentlichen 90 Grad beträgt.

5. Vorrichtung nach einem der Ansprüche 1 bis 4, ferner umfassend Zentrierrollen (126), die drehbar in dem Kopf (102) befestigt sind, um während eines Drehverschließens mit dem Rohr (12) in Eingriff zu treten und dieses zu zentrieren.

6. Vorrichtung nach einem der Ansprüche 1 bis 5, wobei das Mittel zum Drehen des Kopfes einen Elektromotor (104) umfasst.

7. Vorrichtung nach einem der Ansprüche 1 bis 6, wobei das Mittel zum Hin- und Herbewegen des Kopfes einen Hydraulikzylinder (110) umfasst.

## Revendications

1. Dispositif (100) pour la fermeture par fluotournage d'une extrémité ouverte (30) d'un tube (12) comprenant une tête (102) ; un alésage traversant (114) présentant un axe longitudinal (A) et s'étendant à travers la tête ; un moyen (104) pour la rotation de la tête autour de l'axe longitudinal ; un moyen (110) pour le mouvement alternatif de la tête dans la direction longitudinale (X) ; et une paire de rouleaux (110), chaque rouleau étant monté à rotation dans un alésage (120) ménagé dans la tête, chaque alésage s'ouvrant dans l'alésage traversant, et chaque rouleau présentant une surface de contact (124) selon un angle prédéterminé par rapport à l'axe longitudinal et qui est positionné dans l'alésage traversant ; **caractérisé par** un passage traversant (116) s'étendant à travers la tête dans une direction diamétrale (Y) sensiblement perpendiculaire à l'axe longitudinal, et s'ouvrant dans l'alésage traversant ; en ce que chaque alésage s'ouvre dans le passage traversant ; et en ce que chaque surface de contact est positionnée dans le passage traversant.

2. Dispositif selon la revendication 1, dans lequel les alésages (120) destinés aux rouleaux (118) sont alignés et opposés par le diamètre par rapport à l'alésage traversant (114).

3. Dispositif selon la revendication 1 ou la revendication 2, dans lequel les alésages (120) destinés aux rouleaux (118) présentent un axe longitudinal qui est sensiblement perpendiculaire à l'axe longitudinal (A) de l'alésage traversant (114).

4. Dispositif selon l'une quelconque des revendications 1 à 3, dans lequel l'angle prédéterminé est sensiblement égal à 90° degrés.

5. Dispositif selon l'une quelconque des revendications 1 à 4, comprenant en outre des rouleaux de centrage (126) montés à rotation dans la tête (102) pour la mise en prise et le centrage du tube (12) pendant la fermeture par fluotournage.

6. Dispositif selon l'une quelconque des revendications 1 à 5, dans lequel le moyen de rotation de la tête comprend un moteur électrique (104).

7. Dispositif selon l'une quelconque des revendications 1 à 6, dans lequel le moyen de déplacement alternatif de la tête comprend un vérin hydraulique (110).
